# EUROPEAN PATENT APPLICATION

(11) **EP 2 781 846 A1**
(43) Date of publication of application: **24.09.2014**
(21) Application number: 12849873.0
(22) Date of filing: 13.11.2012
(51) Int. Cl.: F24F 7/08

(54) **SUPPLY AND EXHAUST VENTILATION DEVICE**

(30) Priority: 16.11.2011 JP 2011250361; 18.09.2012 JP 2012204069
(71) Applicant: Panasonic Corporation, Osaka 571-8501 (JP)
(72) Inventor: IIO, Kouji, Osaka 540-6207 (JP); ARAKI, Naoya, Osaka 540-6207 (JP); TAKESHITA, Kei, Osaka 540-6207 (JP); YAMAMOTO, Taketo, Osaka 540-6207 (JP); HASHINO, Daisuke, Osaka 540-6207 (JP); TAKENAWA, Shingo, Osaka 540-6207 (JP)
(74) Representative: Grünecker, Kinkeldey, Stockmair & Schwanhäusser
(86) International application number: PCT/JP2012/007262
(87) International publication number: WO 2013/073165

(57) **Abstract**

Supply and exhaust type ventilation device (1) includes: supply air flow passage (6) for supplying outside air (30) by supply air fan (8); and exhaust air flow passage (7) for blowing off indoor air (33) by exhaust air fan (9). Supply air fan (8) and exhaust air fan (9) are mounted on rotary shaft (10a) of one electric motor (10). Opening adjusting parts (14) which adjust a volume of outside air (30) passing through supply air flow passage (6) and a volume of indoor air (33) passing through exhaust air flow passage (7) are disposed in supply air flow passage (6) and exhaust air flow passage (7), respectively.

## Description

### TECHNICAL FIELD

The present invention relates to a supply and exhaust type ventilation device which performs the supply of air and the exhaust of air simultaneously.

### BACKGROUND ART

Conventionally, in a supply and exhaust type ventilation device provided with a heat exchanger which performs a heat exchange between outside air and indoor air, indoor air is taken into the ventilation device through an indoor air exhaust opening formed on a lower surface of a main body, and indoor air is forcibly exhausted to the outside of a room (see Patent Literature 1, for example).

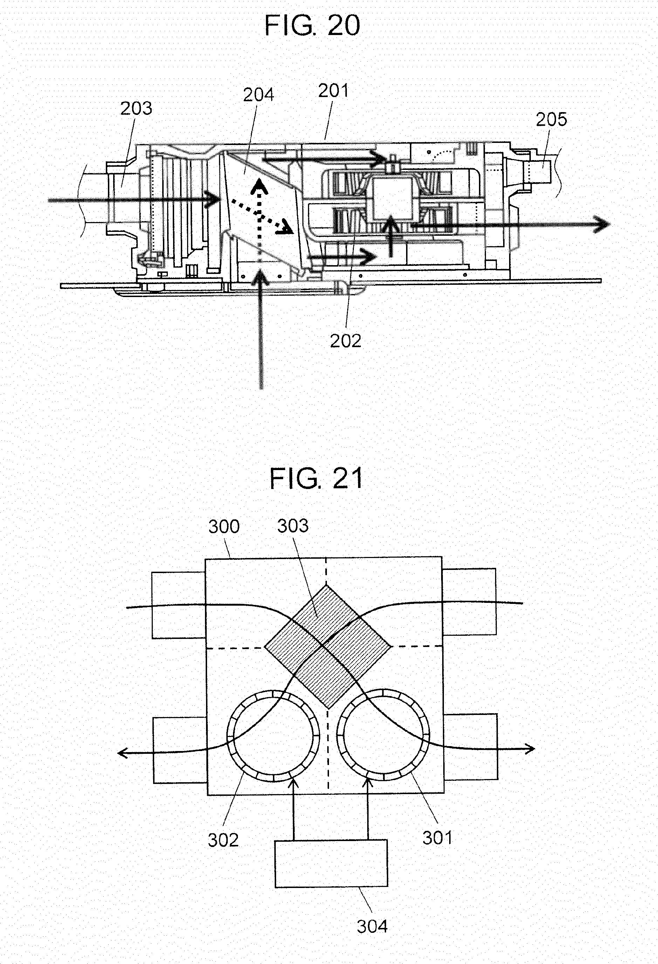

FIG. 20 is a side cross-sectional view of a conventional supply and exhaust type ventilation device provided with a heat exchanger. As shown in FIG. 20, ventilation device body 201 introduces fresh outside air from an outside supply air opening by supply air fan 202, and takes in outside air from outside air intake opening 203 of ventilation device body 201 through a duct. Then, ventilation device body 201 blows off fresh outside air from main body supply air opening 205 by way of heat exchange element 204, and supplies outside air into the inside of a room from an indoor supply air opening through a duct.

In such a conventional supply and exhaust type ventilation device, when a supply air flow passage has a longer duct pipe length than an exhaust air flow passage, a duct pressure loss on an exhaust side becomes small. Accordingly, when a supply air volume is set to a predetermined air volume, an exhaust air volume takes a large value with respect to the supply air volume. In this case, the supply air volume and the exhaust air volume are unbalanced so that the exhaust air volume becomes larger than the supply air volume. As a result, the inside of the room becomes a negative pressure, thus giving rise to a drawback such as difficulty in opening a door.

On the other hand, when the supply air flow passage has a smaller duct pipe length than the exhaust air flow passage, a duct pressure loss in the exhaust air flow passage is increased. Accordingly, when a supply air volume is set to a predetermined air volume, an exhaust air volume takes a small value with respect to the supply air volume. In this case, the supply air volume and the exhaust air volume are unbalanced so that the exhaust air volume becomes smaller than the supply air volume. As a result, the pressure in the room becomes a positive pressure, thus giving rise to a drawback such as difficulty in closing the door.

The conventional supply and exhaust type ventilation device is further described with reference to FIG. 21. FIG. 21 is a configuration view of the conventional supply and exhaust type ventilation device. The conventional supply and exhaust type ventilation device includes DC motor 301, DC motor 302, heat exchanger 303 and control device 304. In a supply air flow passage formed in the inside of body 300, DC motor 301 and a supply air fan are provided. In an exhaust air flow passage, DC motor 302 and an exhaust air fan are provided. Heat exchanger 303 is disposed at a position where the supply air flow passage and the exhaust air flow passage intersect with each other. Control device 304 controls drive voltages and rotational speeds of DC motor 301 and DC motor 302 independently (see Patent Literature 2, for example).

Such a conventional supply and exhaust type ventilation device further includes, in addition to DC motor 301 and the fan for supply air, DC motor 302 and the fan for exhaust air in the inside of main body 300. Pressure losses in the supply air flow passage and the exhaust air flow passage are detected by respective DC motors 301, 302, and air volumes in the supply air flow passage and the exhaust air flow passage are controlled by DC motors 301, 302 respectively. Accordingly, both supply air and exhaust air are held at target air volumes. However, it is necessary to provide two DC motors 301, 302 and two fans and hence, a volume of the main body is increased whereby the location where the main body is installed is limited. Further, the conventional supply and exhaust type ventilation device also has a drawback that the power consumption is increased due to driving of two DC motors 301, 302.

Further, to realize the miniaturization of an apparatus, there has been known a supply and exhaust type ventilation device which includes one DC motor having two shafts, and a supply air fan and an exhaust air fan which are joined to both the shafts. However, in the supply and exhaust type ventilation device having such a configuration, for facilitating installation property, a supply air duct and an exhaust air duct for connection with the outside are disposed on one side surface of the supply and exhaust type ventilation device. Accordingly, the degree of freedom in the arrangement of the heat exchanger and the DC motor to which two fans are connected is decreased. As a result, it is difficult to hold a pressure loss in the supply air flow passage and a pressure loss in the exhaust air flow passage in a state where these pressure losses are equal (1:1).

Further, at the time of installing the supply and exhaust type ventilation device, in addition to the pressure losses generated in the supply air flow passage and the exhaust air flow passage, it is also necessary to take into account pressure losses in ducts connected to the outside. Accordingly, a pressure balance between a pressure applied to the fan for supply air and a pressure applied to the fan for exhaust air changes, thus giving rise to drawbacks such as shortage of an air volume, an excessively large air volume, and an unbalanced air volume between supply air and exhaust air.

### Citation List.

### Patent Literatures

PTL 1: Unexamined Japanese Patent Publication No. 2005-106427
PTL 2: Unexamined Japanese Patent Publication No. 2010-190524

### SUMMARY OF THE INVENTION

A main body of a supply and exhaust type ventilation device according to the present invention includes a supply air flow passage for supplying outside air into the inside of a room from the outside by a supply air fan. The main body further includes an exhaust air flow passage for blowing off indoor air from the inside of the room to the outside of the room by an exhaust air fan. The supply air fan and the exhaust air fan are mounted on a rotary shaft of one electric motor. An opening adjusting part which adjusts air volumes of outside air and indoor air passing through the supply air flow passage and the exhaust air flow passage respectively is provided to the supply air flow passage and the exhaust air flow passage.

Such a supply and exhaust type ventilation device can change opening areas of the supply air flow passage and the exhaust air flow passage by the opening adjusting parts provided to the supply air flow passage and the exhaust air flow passage. As a result, an air volume which passes through the supply air flow passage and an air volume which passes through the exhaust air flow passage are increased or decreased so that a balance is maintained between a supply air volume and an exhaust air volume.

Further, in the supply and exhaust type ventilation device according to the present invention, an indoor-side suction opening, an indoor-side discharge opening, an outdoor-side suction opening and an outdoor-side discharge opening are formed in the main body. The supply and exhaust type ventilation device further includes a supply air damper which adjusts an opening area of the outdoor-side suction opening, and an exhaust air damper which adjusts an opening area of the outdoor-side discharge opening. The supply and exhaust type ventilation device further includes a supply air flow passage which makes the outdoor-side suction opening communicate with the indoor-side discharge opening for supplying outside air to the inside of a room, and an exhaust air flow passage which makes the indoor-side suction opening communicate with the outdoor-side discharge opening for discharging indoor air to the outside of the room. The supply and exhaust type ventilation device further includes a supply air fan and an exhaust air fan which are disposed in the supply air flow passage and the exhaust air flow passage respectively. The supply and exhaust type ventilation device includes a DC motor which is a direct-current motor and drives the supply air fan and the exhaust air fan using one drive shaft. The supply and exhaust type ventilation device further includes: a damper drive controller which drives the supply air damper and the exhaust air damper; a DC motor drive controller which adjusts a drive voltage of the DC motor; a current detection part which detects a current flowing in the DC motor; and a rotational speed detection part which detects a rotational speed of the DC motor. The supply and exhaust type ventilation device further includes a controller which controls a drive voltage of the DC motor for adjusting the degrees of openings of the supply air damper and the exhaust air damper such that one dumper is fully opened and the other damper produces a target air volume. The controller further includes an initial setting part which determines a target rotational speed of the DC motor and the degree of openings of the supply air damper and the exhaust air damper with respect to target air volumes of the supply air fan and the exhaust air fan. The initial setting part includes a target rotational speed calculating part which calculates a target rotational speed by adjusting a drive voltage based on the relationship between a current flowing in the DC motor and a rotational speed of the DC motor at which a target air volume is acquired by operating the DC motor drive controller. The initial setting part further includes an exhaust air flow passage rotational speed determination part which calculates a rotational speed at which the exhaust air fan realizes a target air volume by the target rotational speed calculating part in a state where the supply air damper is in a fully-closed state and the exhaust air damper is a fully-open state, and sets the rotational speed as a rotational speed of the exhaust air fan. The initial setting part further includes a supply air flow passage rotational speed determination part which calculates a rotational speed at which the supply air fan realizes a target air volume by the target rotational speed calculating part in a state where the exhaust air damper is in a fully-closed state and the supply air damper is in a fully-open state, and sets the rotational speed as a rotational speed of the supply air fan. The initial setting part further includes a target rotational speed determination part which compares a rotational speed of the exhaust air fan with a rotational speed of the supply air fan, and determines the larger rotational speed as a target rotational speed. The initial setting part further includes a damper opening determination part which determines the degree of opening of the exhaust air damper and the degree of opening of the supply air damper. The supply and exhaust type ventilation device adjusts the degree of opening of the damper in the flow passage where a rotational speed is smaller such that the flow passage where the rotational speed is smaller acquires a target air volume while fully closing the damper in the flow passage where a rotational speed is larger out of the exhaust air damper and the supply air damper.

In such a supply and exhaust type ventilation device, even when the difference in duct pressure loss is generated between the supply air flow passage and the exhaust air flow passage for every installation site, a state where a pressure loss in the exhaust air flow passage becomes maximum is created by fully closing the exhaust air damper. Then, a rotational speed of the fan for realizing a target air volume is realized by fully opening the supply air damper, and a pressure loss in the supply air flow passage when the supply and exhaust type ventilation device is installed is calculated by detecting a current of the DC motor at this point of time. A rotational speed of the fan for realizing a target air volume is realized by fully opening the exhaust air damper by creating a state where a pressure loss in the supply air flow passage becomes maximum by fully closing the supply air damper, and a pressure loss in the exhaust air flow passage when the supply and exhaust type ventilation device is installed is calculated by detecting a current of the DC motor at this point of time. Then, a pressure loss in the supply air flow passage and a pressure loss in the exhaust air flow passage become equal to each other by adjusting an angle of the damper in the air flow passage where a pressure loss is lower thus acquiring an equal air volume balance.

### BRIEF DESCRIPTION OF DRAWINGS

FIG. 1 is a perspective view as viewed from a lower side of a supply and exhaust type ventilation device according to a first embodiment of the present invention.
FIG. 2 is a side cross-sectional view of the supply and exhaust type ventilation device.
FIG. 3 is a perspective view with a part broken away of an exhaust air flow passage in the stipply and exhaust type ventilation device.
FIG. 4 is a perspective view with a part broken away of the supply and exhaust type ventilation device showing a supply-air side opening adjusting part.
FIG. 5 is a perspective view with a part broken away of the supply and exhaust type ventilation device showing an exhaust-air side opening adjusting part.
FIG. 6 is a perspective view of an opening adjusting part of the supply and exhaust type ventilation device.
FIG. 7 is a perspective view of an electric motor-equipped opening adjusting part of the supply and exhaust type ventilation device.
FIG. 8 is an exploded perspective view of the electric motor-equipped opening adjusting part of the supply and exhaust type ventilation device.
FIG. 9 is a perspective view with a part broken away of the supply and exhaust type ventilation device which further includes a heater.
FIG. 10 is a side cross-sectional view of the supply and exhaust type ventilation device which further includes filters.
FIG. 11A is a side view of a supply and exhaust type ventilation device according to a second embodiment of the present invention.
FIG. 11B is a bottom plan view of the supply and exhaust type ventilation device.
FIG. 12 is a block diagram of a control circuit of the supply and exhaust type ventilation device.
FIG. 13 is a block diagram of a CPU of the supply and exhaust type ventilation device.
FIG. 14 is a control flowchart of the supply and exhaust type ventilation device.
FIG. 15A is a schematic view of the supply and exhaust type ventilation device at the time of detecting an angle of exhaust air damper showing the angle of the damper under a condition of N1 > N2.
FIG. 15B is an operation explanatory view of the supply and exhaust type ventilation device for describing the operation of the ventilation device at the time of controlling an air volume balance under the condition of N1 > N2.
FIG. 16A is a schematic view of the supply and exhaust type ventilation device at the time of detecting an angle of exhaust air damper showing the angle of the damper under a condition of N1 < N2.
FIG. 16B is an operation explanatory view of the supply and exhaust type ventilation device for describing the operation of the ventilation device at the time of controlling an air volume balance under the condition of N1 < N2.
FIG. 17 is a block diagram of a CPU of supply and exhaust type ventilation device according to a third embodiment of the present invention.
FIG. 18 is a table showing rotational speed correction values of the supply and exhaust type ventilation device.
FIG. 19 is a control flowchart of the supply and exhaust type ventilation device.
FIG. 20 is a side cross-sectional view of a conventional supply and exhaust type ventilation device provided with a heat exchanger.
FIG. 21 is a configuration view of the conventional supply and exhaust type ventilation device.

### DESCRIPTION OF EMBODIMENTS

Hereinafter, embodiments of the present invention are described with reference to the drawings.

### FIRST EXEMPLARY EMBODIMENT

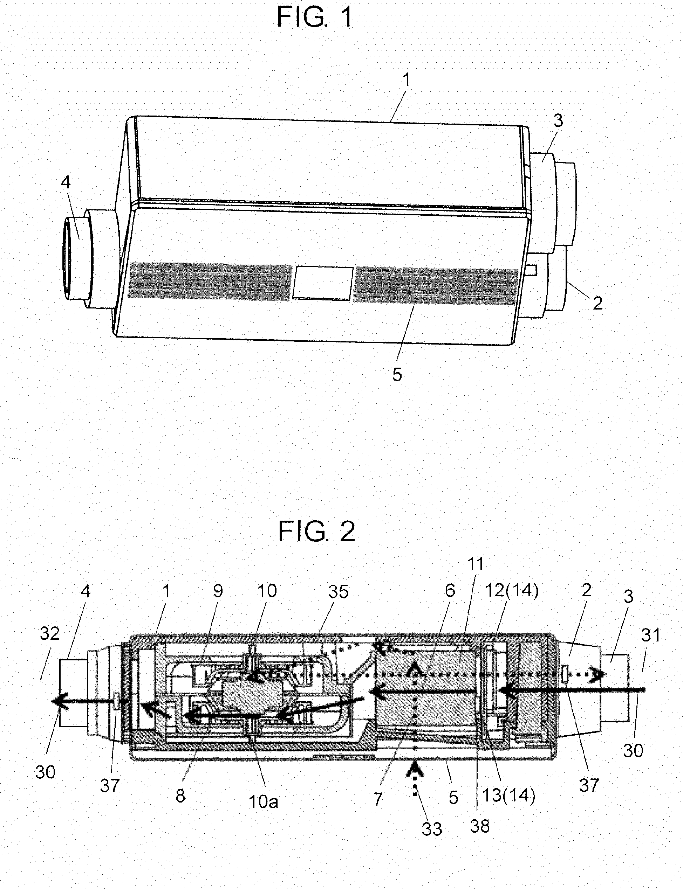

FIG. 1 is a perspective view as viewed from a lower side of a supply and exhaust type ventilation device according to a first embodiment of the present invention. As shown in FIG. 1, supply and exhaust type ventilation device 1 has a box shape, and includes: indoor air suction opening 5; outside air suction opening 2; indoor air exhaust opening 3; and outside supply air opening 4. In this embodiment, indoor air suction opening 5 is formed on a lower portion of supply and exhaust type ventilation device 1. Outside air suction opening 2 and indoor air exhaust opening 3 are formed on a side surface of supply and exhaust type ventilation device 1. Outside supply air opening 4 is formed on a side opposite to the side surface of supply and exhaust type ventilation device 1 on which outside air suction opening 2 and indoor air exhaust opening 3 are formed.

FIG. 2 is a side cross-sectional view of the supply and exhaust type ventilation device according to the first embodiment of the present invention. As shown in FIG. 2, main body 35 of supply and exhaust type ventilation device 1 sucks outside air 30 from outside 31 through outside air suction opening 2 by operating supply air fan 8. Main body 35 includes supply air flow passage 6 along which outside air 30 passes heat exchange element 11 disposed in the inside of supply and exhaust type ventilation device 1 and is supplied to the inside of room 32 through outside supply air opening 4.

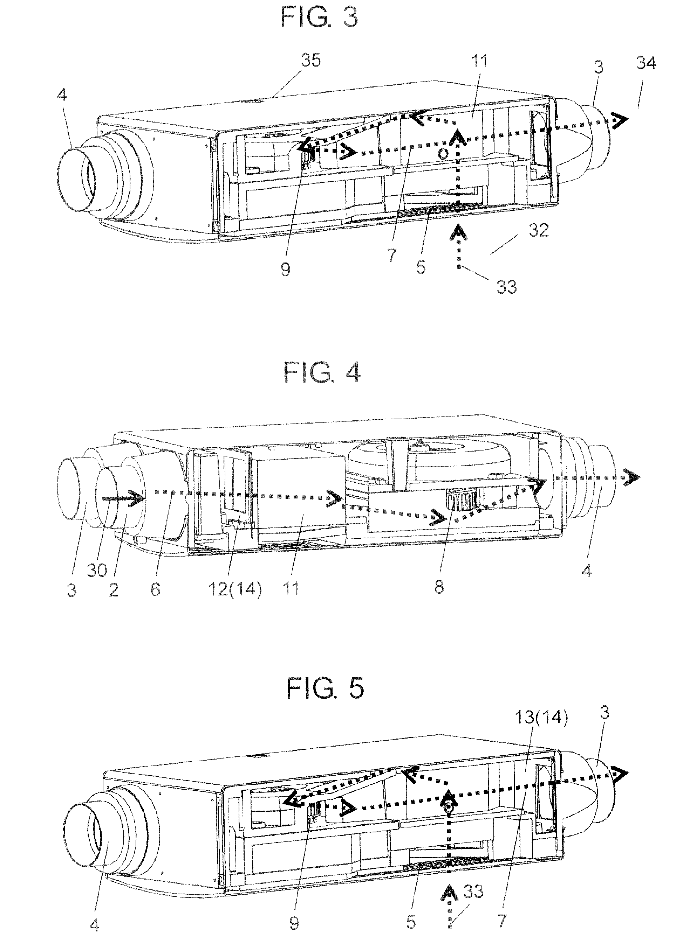

FIG. 3 is a partial perspective view of an exhaust air flow passage in the supply and exhaust type ventilation device according to the first embodiment of the present invention. As shown in FIG. 3, main body 35 includes exhaust air flow passage 7 along which indoor air 33 is sucked from inside of room 32 through indoor air suction opening 5 by operating exhaust air fan 9, passes heat exchange element 11 and is discharged to outside of room 34 through indoor air exhaust opening 3. In such a configuration, heat exchange element 11 performs a function of collecting heat. That is, heat exchange element 11 supplies a heat value of air to be discharged to air to be supplied, or supplies a heat value of air to be supplied to air to be discharged.

As shown in FIG. 2, fresh outside air 30 introduced into supply and exhaust type ventilation device 1 through outside air suction opening 2 flows through supply air flow passage 6 by operating supply air fan 8, while polluted indoor air 33 introduced into supply and exhaust type ventilation device 1 through indoor air suction opening 5 flows through exhaust air flow passage 7 by operating exhaust air fan 9. In this embodiment, supply air fan 8 and exhaust air fan 9 are mounted on rotary shaft 10a of one electric motor 10. Heat exchange element 11 is disposed at a position where supply air flow passage 6 and exhaust air flow passage 7 intersect with each other. Impellers having the same performance are used for forming supply air fan 8 and exhaust air fan 9 respectively.

Outside air suction opening 2, indoor air exhaust opening 3 and outside supply air opening 4 respectively have a shape which allows the connection of a duct (not shown) thereto. The duct connected to outside air suction opening 2 and the duct connected to indoor air exhaust opening 3 are pulled out to an outside wall surface of a building and are communicated with outside air 30 outside of the building. The duct connected to outside supply air opening 4 is communicated with a ceiling surface or a wall surface of a living room, and outside air 30 is supplied to inside of room 32 through the duct.

FIG. 4 is a perspective view with a part broken away of the supply and exhaust type ventilation device according to the first embodiment of the present invention showing a supply-air side opening adjusting part. As shown in FIG. 4, supply air flow passage 6 includes attached thereto supply-air side opening adjusting part 12 which constitutes opening adjusting part 14 for adjusting an air volume of outside air 30 passing through supply air flow passage 6.

FIG. 5 is a perspective view with a part broken away of the supply and exhaust type ventilation device according to the first embodiment of the present invention showing an exhaust-air side opening adjusting part. As shown in FIG. 5, exhaust air flow passage 7 includes attached thereto exhaust-air side opening adjusting part 13 which constitutes opening adjusting part 14 for adjusting an air volume of indoor air 33 passing through exhaust air flow passage 7.

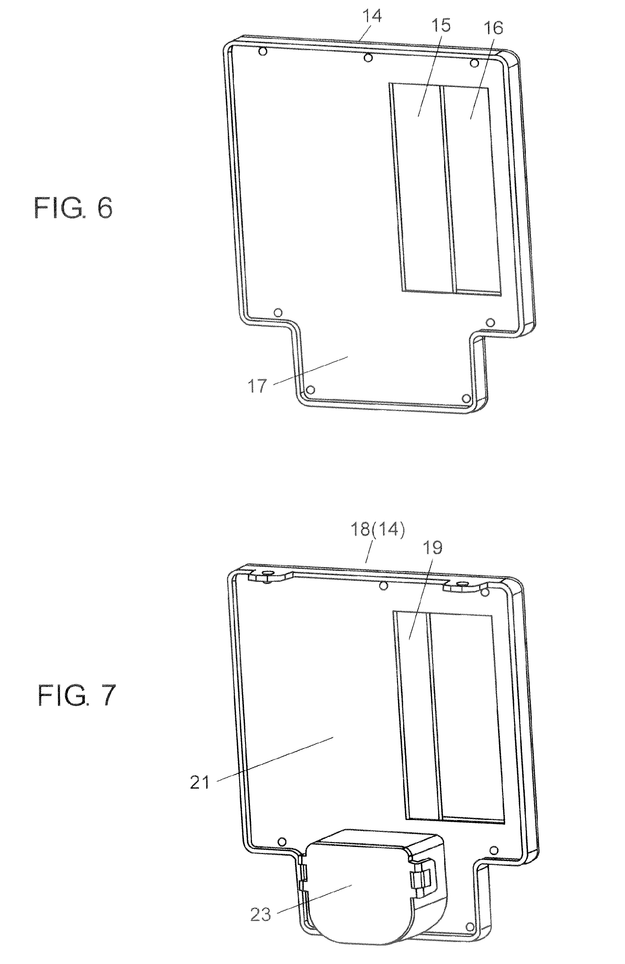

FIG. 6 is a perspective view of the opening adjusting part of the supply and exhaust type ventilation device according to the first embodiment of the present invention. As shown in FIG. 6, opening adjusting part 14 includes: holding portion 17 having opening 16; and shielding portion 15. Opening adjusting part 14 is mounted such that leakage of air to supply air flow passage 6 shown in FIG. 4 and exhaust air flow passage 7 shown in FIG. 3 through opening adjusting part 14 can be prevented. By mounting opening adjusting part 14 in this manner, all supply air and all exhaust air pass through opening 16 (FIG. 6) of supply-air side opening adjusting part 12 and opening 16 (FIG. 6) of exhaust-air side opening adjusting part 13 shown in FIG. 2. An opening area of opening 16 shown in FIG. 6 can be changed by adjusting shielding portion 15. By changing opening areas of supply air flow passage 6 and exhaust air flow passage 7 shown in FIG. 2 respectively, air volumes of air passing through supply air flow passage 6 and exhaust air flow passage 7 can be adjusted to be increased or decreased respectively.

The manner of operation of supply and exhaust type ventilation device 1 having the above-mentioned configuration is described hereinafter.

In supply and exhaust type ventilation device 1 shown in FIG. 2, ducts are connected to outside air suction opening 2, indoor air exhaust opening 3, and outside supply air opening 4, respectively. The ducts connected to outside air suction opening 2 and indoor air exhaust opening 3 are communicated with outside air 30. The duct connected to outside supply air opening 4 is communicated with the ceiling surface or the wall surface of the living room, and outside air 30 is supplied to inside of room 32 through the duct.

When a duct pipe length of supply air flow passage 6 is longer than a duct pipe length of exhaust air flow passage 7, a duct pressure loss in exhaust air flow passage 7 becomes smaller. Accordingly, when supply and exhaust type ventilation device 1 is operated in a state where a supply air volume is set to a predetermined air volume, an exhaust air volume becomes larger than a supply air volume. In such a case, shielding portion 15 shown in FIG. 6 of exhaust-air side opening adjusting part 13 disposed in exhaust air flow passage 7 is adjusted. That is, an opening area of opening 16 is decreased so that a duct pressure loss in exhaust air flow passage 7 shown in FIG. 2 is increased. As a result, the exhaust air volume is decreased so that a duct pressure loss on a supply-air side and a duct pressure loss on an exhaust-air side become equal whereby a balance is established between the supply air volume and the exhaust air volume.

On the other hand, when the duct pipe length of supply air flow passage 6 shown in FIG. 2 is shorter than the duct pipe length of exhaust air flow passage 7, a duct pressure loss in exhaust air flow passage 7 is increased. Accordingly, when a supply air volume is set to a predetermined air volume, since supply air fan 8 and exhaust air fan 9 are rotated by same rotary shaft 10a, an exhaust air volume becomes smaller than the supply air volume. The exhaust air volume is below a predetermined air volume and hence, a rotational speed of electric motor 10 is increased for allowing exhaust air fan 9 to produce air having a predetermined air volume. Due to the increase of the rotational speed, the exhaust air volume becomes the predetermined air volume. However, at the same time, the supply air volume becomes larger than a predetermined air volume, and the supply air volume becomes larger than the exhaust air volume. In such a case, shielding portion 15 shown in FIG. 6 of supply-air side opening adjusting part 12 disposed in supply air flow passage 6 is adjusted. That is, opening area of opening 16 is decreased so that a duct pressure loss in supply air flow passage 6 shown in FIG. 2 is increased. In this manner, the supply air volume is decreased so that a duct pressure loss on an exhaust-air side and a duct pressure loss on a supply-air side become equal whereby a balance is established between the supply air volume and the exhaust air volume.

Further, depending on a state of a duct installation, there may be a case where the supply air volume becomes larger than the exhaust air volume or the supply air volume becomes smaller than the exhaust air volume. However, as shown in FIG. 2, supply and exhaust type ventilation device 1 includes two opening adjusting parts 14, that is, supply-air side opening adjusting part 12 and exhaust-air side opening adjusting part 13. Accordingly, supply and exhaust type ventilation device 1 can cope with both cases so that a balance can be maintained between the supply air volume and the exhaust air volume.

In this manner, according to supply and exhaust type ventilation device 1 of the first embodiment, even when supply air flow passage 6 and exhaust air flow passage 7 may have different duct pipe lengths, a balance can be maintained between the supply air volume and an exhaust air volume.

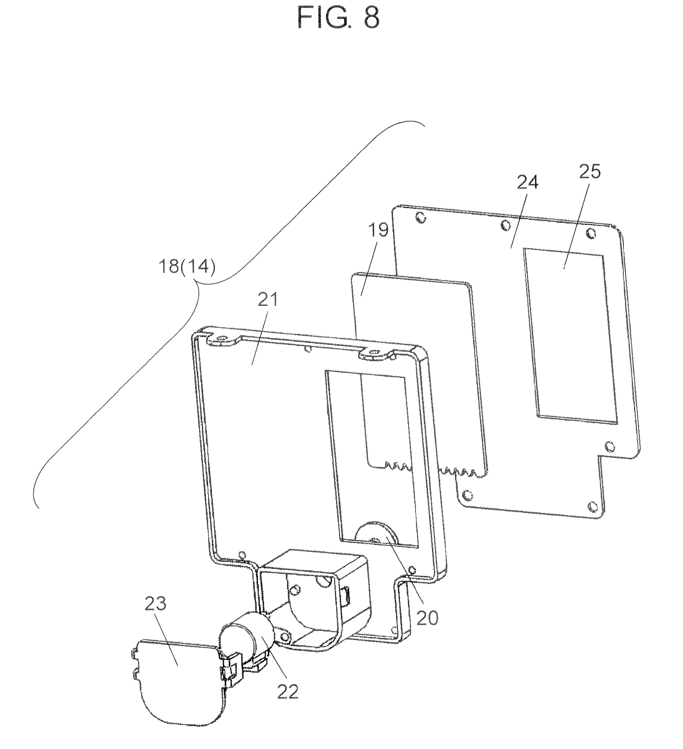

FIG. 7 is a perspective view of an electric motor-equipped opening adjusting part of the supply and exhaust type ventilation device provided with a heat exchanger according to the first embodiment of the present invention, and FIG. 8 is an exploded perspective view of the electric motor-equipped opening adjusting part of the supply and exhaust type ventilation device. As shown in FIG. 7 and FIG. 8, with respect to electrically-operated opening adjusting part 18 which constitutes opening adjusting part 14, shielding portion 19 is operated by electric motor 22 for adjusting opening which constitutes an electrically-operated part. Electrically-operated opening adjusting part 18 may be used as supply-air side opening adjusting part 12 and exhaust-air side opening adjusting part 13 shown in FIG. 2. As shown in FIG. 8, in electrically-operated opening adjusting part 18, electric motor 22 for adjusting opening is held on holding portion 21 by electric motor holding cover 23. Pinion gear 20 is mounted on a rotary shaft of electric motor 22 for adjusting opening. A rack gear which is meshed with pinion gear 20 is formed on an edge of shielding portion 19, and shielding portion 19 is held on holding portion 21 by cover 24. Electrically-operated opening adjusting part 18 includes shielding portion 19 and electric motor 22 for adjusting opening.

In electrically-operated opening adjusting part 18 which is disposed such that leakage of air to supply air flow passage 6 and exhaust air flow passage 7 through electrically-operated opening adjusting part 18 can be prevented, shielding portion 19 is slid by driving electric motor 22 for adjusting opening thus adjusting an degree of opening of opening 25 within a range from a fully-closed position to a fully-open position.

By operating shielding portion 19 by electric motor 22 for adjusting opening, the test run adjustment at the time of installing the supply and exhaust type ventilation device can be simplified and hence, installation property of the supply and exhaust type ventilation device is enhanced.

Further, as shown in FIG. 2, a measuring part (hereinafter referred to as "air volume sensor 37") which measures an air volume in supply air flow passage 6 is disposed in supply air flow passage 6, while a measuring part (hereinafter referred to as "air volume sensor 37") which measures an air volume in exhaust air flow passage 7 is disposed in exhaust air flow passage 7. Supply and exhaust type ventilation device 1 includes controller 38 which controls electrically-operated opening adjusting part 18 disposed in supply air flow passage 6 and electrically-operated opening adjusting part 18 disposed in exhaust air flow passage 7. Controller 38 causes air volume sensors 37 to measure an air volume in supply air flow passage 6 and an air volume in exhaust air flow passage 7, thus adjusting degrees of opening of electrically-operated opening adjusting parts 18. That is, when a measured value of air volume sensor 37 is below a predetermined air volume, controller 38 widens opening 25 for supply air flow passage 6 or opening 25 for exhaust air flow passage 7 by operating electric motor 22 for adjusting opening and shielding portion 19 shown in FIG. 8. On the other hand, when a measured value of air volume sensor 37 exceeds a predetermined air volume, controller 38 narrows opening 25 for supply air flow passage 6 or opening 25 for exhaust air flow passage 7 by operating electric motor 22 for adjusting opening and shielding portion 19. In this manner, controller 38 controls the operation of electrically-operated opening adjusting part 18 for acquiring a predetermined air volume. That is, controller 38 adjusts the degree of opening of shielding portion 19 by controlling electric motor 22 for adjusting opening using an output of air volume sensor 37 as an input.

In the above-mentioned configuration, when the operation of supply and exhaust type ventilation device 1 shown in FIG. 2 is started, an airflow is generated in supply air flow passage 6 and exhaust air flow passage 7 respectively. Air volume sensors 37 disposed in supply air flow passage 6 and exhaust air flow passage 7 respectively detect an air volume in supply air flow passage 6 and an air volume in exhaust air flow passage 7. When the detected air volume in supply air flow passage 6 or the detected air volume in exhaust air flow passage 7 is smaller than the predetermined air volume, a rotational speed of electric motor 10 is increased. The air volumes are measured by air volume sensors 37 again, and the rotational speed of electric motor 10 is increased until the predetermined air volume is detected. When the detected air volume in supply air flow passage 6 or the detected air volume in exhaust air flow passage 7 is larger than the predetermined air volume, controller 38 narrows opening 25 by operating electrically-operated opening adjusting parts 18 disposed in supply air flow passage 6 or exhaust air flow passage 7. Due to such operations, a pressure loss in supply air flow passage 6 or exhaust air flow passage 7 is increased so that an air volume in supply air flow passage 6 or exhaust air flow passage 7 is decreased. An air volume is measured by air volume sensor 37 again and, when the air volume is below the predetermined air volume, controller 38 adjusts the opening area of opening 25 by operating electrically-operated opening adjusting part 18 again. By repeating a series of such operations, the predetermined air volume can be acquired.

Due to the above-mentioned configuration, an air volume in supply air flow passage 6 and an air volume in exhaust air flow passage 7 are measured, and the volume of air passing through supply air flow passage 6 and the volume of air passing through exhaust air flow passage 7 are automatically adjusted to predetermined values.

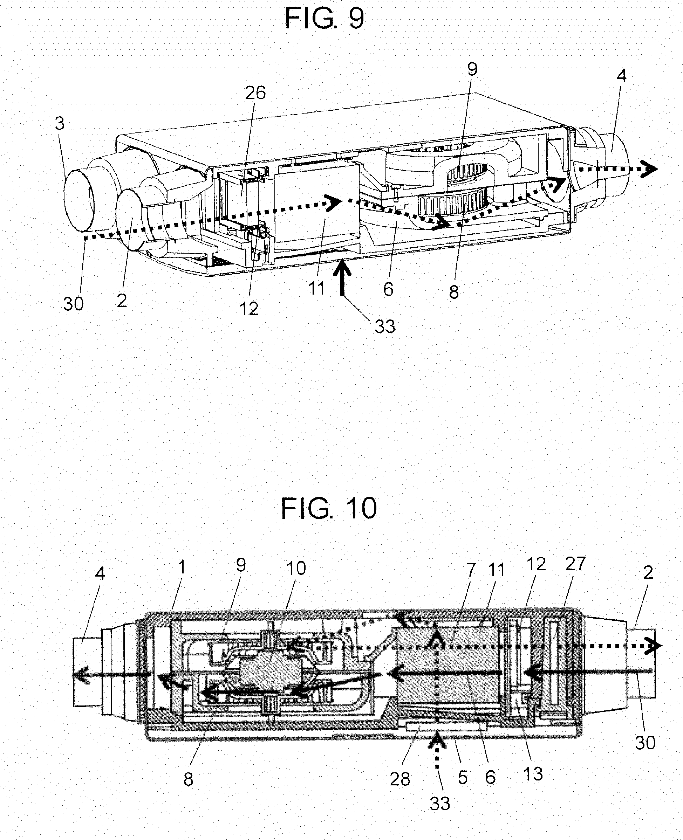

FIG. 9 is a perspective view with a part broken away of the supply and exhaust type ventilation device according to the first embodiment of the present invention which further includes a heater. As shown in FIG. 9, heater 26 which constitutes a heating part for heating outside air 30 is disposed in supply air flow passage 6 such that heater 26 is positioned adjacent to supply-air side opening adjusting part 12, that is, heater 26 is positioned just in front of or just behind supply-air side opening adjusting part 12. In this embodiment, heater 26 is disposed upstream of heat exchange element 11 in supply air flow passage 6.

Outside air 30 is heated and warmed by heater 26. Assuming that a temperature of outside air 30 is below a freezing point, when cold outside air 30 is brought into contact with indoor air 33 by way of heat exchange element 11, indoor air 33 is rapidly cooled so that a temperature of indoor air 33 reaches a dew point temperature whereby vapor condensation occurs. However, by warming introduced outside air 30, the rapid lowering of the temperature of indoor air 33 is prevented so that condensate is not generated. Further, it is also possible to prevent freezing of heat exchange element 11 by freezing of condensate.

Although heater 26 is disposed on the upstream of supply-air side opening adjusting part 12 in FIG. 9, heater 26 may be disposed downstream of supply-air side opening adjusting part, 12.

FIG. 10 is a side cross-sectional view of the supply and exhaust type ventilation device according to the first embodiment of the present invention which further includes filters. As shown in FIG. 10, outside air filter 27 for preventing intrusion of a foreign substance is disposed upstream of supply-air side opening adjusting part 12 in supply air flow passage 6, and indoor air filter 28 for preventing intrusion of a foreign substance is disposed upstream of exhaust-air side opening adjusting part 13 in exhaust air flow passage 7.

Due to the above-mentioned configuration, in supply air flow passage 6, air introduced into supply air flow passage 6 from outside air 30 is cleaned by outside air filter 27. Accordingly, it is possible to avoid defects involved in supply-air side opening adjusting part 12, such as a defect that dust or foreign substance intrudes into supply air flow passage 6 and sticks to supply-air side opening adjusting part 12 so that shielding portion 19 becomes difficult to be operated and a defect that opening 25 (FIG. 8) cannot be completely closed due to sticking of foreign substance to supply-air side opening adjusting part 12. On the other hand, in exhaust air flow passage 7, dirt present in indoor air 33 is removed by indoor air filter 28. Accordingly, it is possible to avoid defects involved in exhaust-air side opening adjusting part 13, such as a defect that dust or foreign substance intrudes into exhaust air flow passage 7 and sticks to exhaust-air side opening adjusting part 13 so that shielding portion 19 becomes difficult to be operated and a defect that opening 25 (FIG. 8) is not completely closed due to the sticking of the foreign substance to exhaust-air side opening adjusting part 13.

Due to the above-mentioned configuration, it is possible to prevent supplyair side opening adjusting part 12 from being polluted by outside air 30. It is also possible to prevent exhaust-air side opening adjusting part 13 from being polluted by indoor air 33. As a result, a balance in air volume can be established in a stable manner between a supply air volume and exhaust air volume.

Although the description has been made with respect to the example where flat-plate shaped shielding portion 19 constitutes opening adjusting part 14 in the first embodiment of the present invention, a damper which adjusts a volume of air passing through the air flow passage may be used as opening adjusting part 14.

### SECOND EXEMPLARY EMBODIMENT

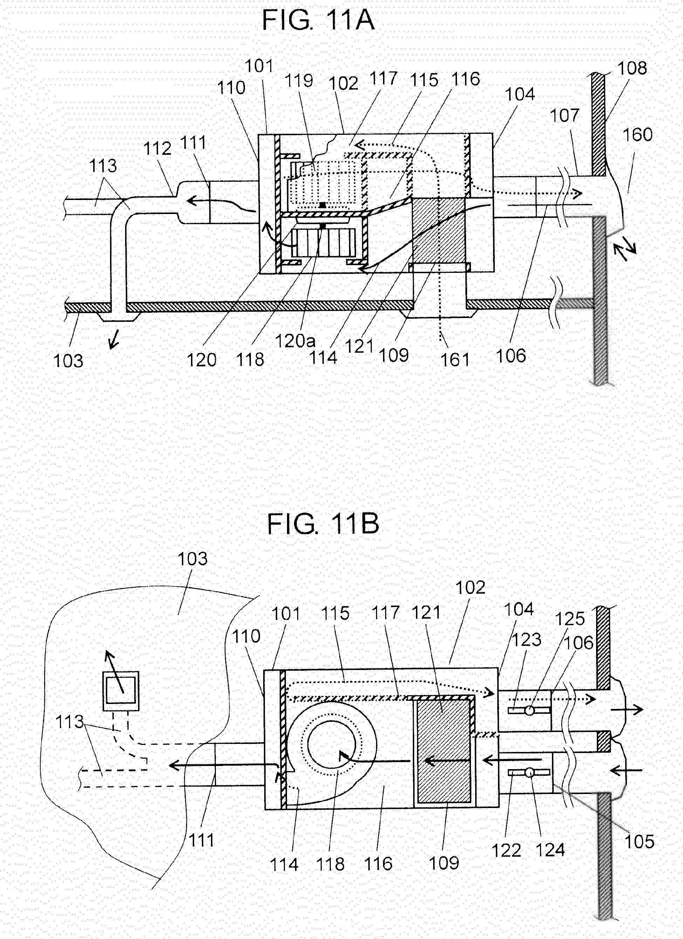

FIG. 11A is a side view of a supply and exhaust type ventilation device according to a second embodiment of the present invention, and FIG. 11B is a bottom plan view of the supply and exhaust type ventilation device. Supply and exhaust type ventilation device 101 according to the second embodiment of the present invention is mounted on a ceiling in a building, in a roof space, in an attic space or on a side wall. In the second embodiment of the present invention, the description is made with respect to a case where supply and exhaust type ventilation device 101 is mounted in the roof space.

Main body 102 shown in FIG. 11A has a rectangular parallelepiped shape where one side extending in the height direction has the smallest size among sides extending in three directions. Main body 102 is disposed parallel to ceiling surface 103. As shown in FIG. 11B, outdoor-side suction opening 105 and outdoor-side discharge opening 106 are formed in one side surface 104 of main body 102 which includes the side extending in the height direction and one side extending in the lateral direction out of the remaining two sides. Outdoor-side suction opening 105 and outdoor-side discharge opening 106 are respectively formed into a shape which allows the connection of duct 107 having a diameter of approximately 100 [mm] thereto.

Duct 107 is made to extend to building outer wall surface 108, and is communicated with outside air 160. Indoor-side suction opening 109 is formed in a lower surface of main body 102. Indoor-side discharge opening 111 is formed in opposing surface 110 opposite to side surface 104. In the same manner as outdoor-side suction opening 105 and outdoor-side discharge opening 106, indoor-side discharge opening 111 is formed into a shape which allows the connection of duct 112 having a diameter of approximately 100 [mm] thereto.

In the second embodiment, duct 112 connected to indoor-side discharge opening 111 is branched into a plurality of small-diameter ducts 113, and small-diameter ducts 113 are communicated with ceiling surfaces 103 of respective living rooms so that outside air 160 is supplied to the inside of the living rooms through small-diameter ducts 113. Indoor-side discharge opening 111 is formed of a plurality of branched small-diameter ducts 113. Indoor-side discharge opening 111 formed on opposing surface 110 of main body 102 opposite to side surface 104 is formed into a shape which allows the connection of a plurality of small-diameter ducts 113 thereto and hence, it is possible to omit a duct branching operation.

Supply air flow passage 114 and exhaust air flow passage 115 are formed in the inside of main body 102. Supply air flow passage 114 is an air flow passage through which outside air 160 introduced into supply and exhaust type ventilation device from the outside of the room through duct 107 is supplied to the inside of the room. That is, supply air flow passage 114 for supplying outside air 160 extends from outdoor-side suction opening 105 to indoor-side discharge opening 111. Exhaust air flow passage 115 is an air flow passage through which indoor air 161 is discharged to the outside of the room. That is, exhaust air flow passage 115 for discharging indoor air 161 extends from indoor-side suction opening 109 to outdoor-side discharge opening 106. These two air flow passages, that is, supply air flow passage 114 and exhaust air flow passage 115 are partitioned by partition plates 116, 117.

Sirocco-type supply air fan 118 is disposed in supply air flow passage 114 and sirocco-type exhaust air fan 119 is disposed in exhaust air flow passage 115. Supply air fan 118 and exhaust air fan 119 are driven by one drive shaft 120a which extends from both sides of DC motor 120 which is a direct-current motor.

Heat exchange element 121 which exchanges heat of indoor air 161 with heat of outside air 160 is disposed at an intersecting portion between supply air flow passage 114 and exhaust air flow passage 115. Heat exchange element 121 collects heat of exhaust air from the inside of the room, and gives the collected heat to the supply air from the outside of the room.

Supply air damper 122 and exhaust air damper 123 which block the intrusion of outside air 160 are provided to outdoor-side suction opening 105 and outdoor-side discharge opening 106 of main body 102 respectively. Supply air damper 122 is connected to electric motor 124 by way of a shaft, and adjusts an opening area of outdoor-side suction opening 105. Exhaust air damper 123 is connected to electric motor 125 by way of a shaft, and adjusts an opening area of outdoor-side discharge opening 106. Examples of electric motors 124, 125 include a stepping motor or the like. The stepping motor is configured such that the number of steps is controllable whereby an opening area can be finely set or adjusted.

In supply air flow passage 114, outdoor-side suction opening 105, supply air damper 122, heat exchange element 121, supply air fan 118, and indoor-side discharge opening 111 are disposed in this order. In exhaust air flow passage 115, indoor-side suction opening 109, heat exchange element 121, exhaust air fan 119, exhaust air damper 123, and outdoor-side discharge opening 106 are disposed in this order.

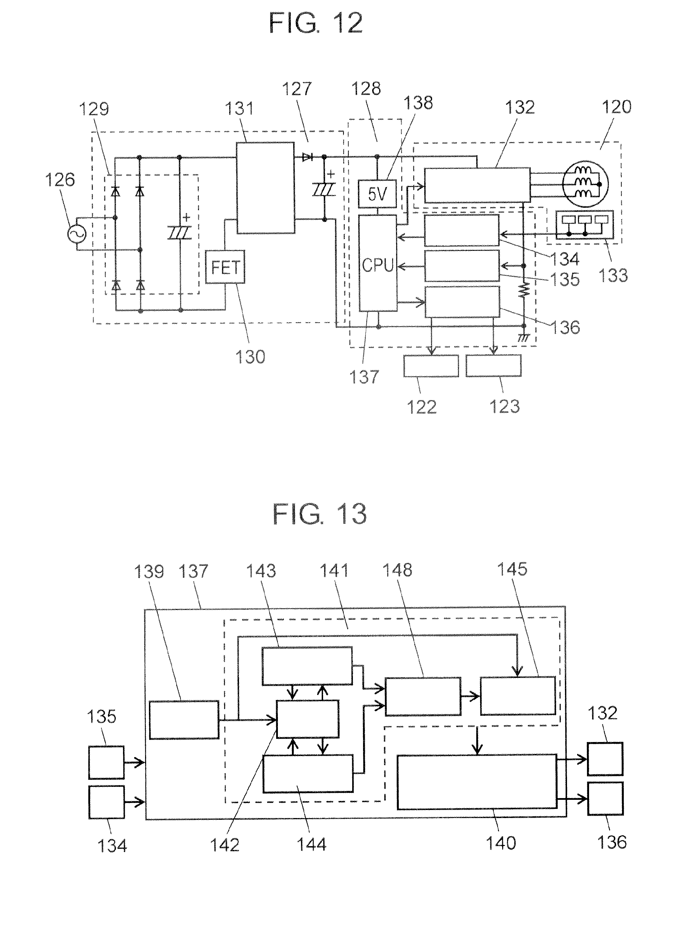

FIG. 12 is a block diagram of a control circuit of the supply and exhaust type ventilation device according to the second embodiment of the present invention. A block of the control circuit includes power source circuit 127 and drive device 128. Power source circuit 127 is connected to commercial power source 126. Drive device 128 drives DC motor 120, supply air damper 122, and exhaust air damper 123.

Power source circuit 127 includes rectifier smoothing circuit 129 constituted of a diode bridge and an electrolytic capacitor. A voltage rectified and smoothed by rectifier smoothing circuit 129 is dropped through switching element 130 such as an FET (Field Effect Transistor), and switching transformer 131. The voltage rectified and smoothed by rectifier smoothing circuit 129 becomes a voltage to be supplied to DC motor 120 and drive device 128. For example, the voltage rectified and smoothed by rectifier smoothing circuit 129 becomes a DC voltage of DC 30 [V].

DC motor 120 is a motor having stator windings of three phases (U phase, V phase, W phase). DC motor 120 includes a drive IC, DC motor drive controller 132 and Hall element 133. In this embodiment, drive IC controls voltages applied to the stator windings. DC motor drive controller 132 adjusts a drive voltage of DC motor 120. Hall element 133 is a position detecting sensor for detecting a position of a rotor.

In the second embodiment, a voltage supplied to DC motor 120 is set to a low voltage of DC 30 [V] which is supplied to a latter stage of switching transformer 131. However, the voltage supplied to DC motor 120 is not limited to such a voltage. The voltage supplied to DC motor 120 may be a high voltage of DC 141 [V] or DC 282 [V] acquired by directly rectifying and smoothing a voltage of commercial power source 126.

Drive device 128 includes: rotational speed detector 134; current detector 135; damper drive controller 136; and controller 137. Rotational speed detector 134 detects a rotational speed of DC motor 120 based on a signal of Hall element 133.

Supply and exhaust type ventilation device 101 according to the second embodiment of the present invention includes: main body 102; supply air damper 122; exhaust air damper 123; supply air flow passage 114; exhaust air flow passage 115; heat exchange element 121; supply air fan 118; exhaust air fan 119; DC motor 120; damper drive controller 136; DC motor drive controller 132; current detector 135; rotational speed detector 134; and controller 137.

Current detector 135 detects a current flowing in a U phase, a V phase and a W phase of DC motor 120. Damper drive controller 136 drives electric motor 124 (FIG. 11B) of supply air damper 122 and electric motor 125 (FIG. 11B) of exhaust air damper 123.

Upon reception of signals from rotational speed detector 134 and current detector 135, controller 137 controls DC motor drive controller 132 and damper drive controller 136. Current detector 135 detects a current of DC motor 120 by detecting voltages at both ends of a resistor or the like connected to a common line of the U phase, the V phase and the W phase of DC motor 120.

In accordance with signals from controller 137, damper drive controller 136 drives electric motor 124 of supply air damper 122 and electric motor 125 of exhaust air damper 123 thus controlling opening/closing of supply air damper 122 and exhaust air damper 123. Controller 137 is constituted of a CPU (Central Processing Unit). Controller 137 is driven by a voltage of DC 5 [V] or DC 3 [V] which is obtained by dropping a voltage applied to DC motor 120 by regulator 138.

Next, the configuration of controller 137 is described with reference to FIG. 13 which is a block diagram of the CPU of the supply and exhaust type ventilation device according to the second embodiment of the present invention. Controller 137 generates pulse signals or analogue signals and transmits the signals to DC motor drive controller 132 thus performing a speed control and stopping of DC motor 120. Controller 137 is operated in accordance with modes of a program which are prepared by a counter, a RAM (Random Access Memory) and a ROM (Read Only Memory) disposed in the inside of controller 137 cooperatively.

Controller 137 includes target air volume controller 140 and initial setting part 141. Target air volume controller 140 controls DC motor drive controller 132 and damper drive controller 136 in response to inputting of a target rotational speed of DC motor 120 shown in FIG. 12, a degree of opening of supply air damper 122 and a degree of opening of exhaust air damper 123. At an initial stage of starting supply and exhaust type ventilation device 101, initial setting part 141 determines a target rotational speed, and the degree of opening of supply air damper 122 and the degree of opening of exhaust air damper 123. That is, controller 137 controls a drive voltage of DC motor 120 such that the degree of opening of one damper out of supply air damper 122 and exhaust air damper 123 is adjusted to a fully open position and the degree of opening of the other damper is adjusted to a position at which a target rotational speed is acquired. An output of initial setting part 141 is inputted to target air volume controller 140.

Initial setting part 141 includes: target rotational speed calculating part 142; exhaust air flow passage rotational speed determination part 143; supply air flow passage rotational speed determination part 144; target rotational speed determination part 148; and damper opening determination part 145. Target rotational speed calculating part 142 calculates a target rotational speed based on target air volume 139. Exhaust air flow passage rotational speed determination part 143 calculates a rotational speed of exhaust air fan 119. Supply air flow passage rotational speed determination part 144 calculates a rotational speed of supply air fan 118. Damper opening determination part 145 determines a degree of opening of supply air damper 122 in supply air flow passage 114, and a degree of opening of exhaust air damper 123 in exhaust air flow passage 115.

Target rotational speed calculating part 142 adjusts a drive voltage based on the relationship between a current flowing in DC motor 120 and a rotational speed at which target air volume 139 is obtained by operating DC motor drive controller 132, and calculates a target rotational speed at the time. Table data is stored in target rotational speed calculating part 142 in advance. The table data is the relationship between rotational speeds and currents of exhaust air fan 119 and supply air fan 118 which are calculated by a relationship formula between a rotational speed and a current of DC motor 120 which are required for maintaining target air volume 139 within a duct length of 0 [m] to 30 [m], for example, an air volume of 100 [m³//h].

Although a duct length may be inputted for every 5 [m], for example, 0 [m], 5 [m] and 10 [m], the accuracy of controlling an air volume may be enhanced by having table data with finer duct length intervals, for example, for every 1m. With respect to a pressure loss in main body 102, provided that a pressure loss in supply air flow passage 114 and a pressure loss in exhaust air flow passage 115 are equal, that is, the relationship between the pressure loss in supply air flow passage 114 and the pressure loss in exhaust air flow passage 115 is 1:1, it is sufficient that one value of a rotational speed and one value of a current are stored in target rotational speed calculating part 142.

However, due to the restriction on the size of main body 102, the size and the arrangement place of heat exchange element 121 or the like, there may be a case where a pressure loss in the main body does not become uniform. To cope with such a case, in the second embodiment, table data is stored in target rotational speed calculating part 142 for each of supply air fan 118 and exhaust air fan 119.

Exhaust air flow passage rotational speed determination part 143 calculates a rotational speed at which exhaust air fan 119 realizes target air volume 139, for example, an air volume of 100 [m³/h] by target rotational speed calculating part 142 in a state where supply air damper 122 is in a fully-closed state and exhaust air damper 123 is in a fully-open state, and sets such a rotational speed as a rotational speed of exhaust air fan 119.

Supply air flow passage rotational speed determination part 144 calculates a rotational speed at which supply air fan 118 realizes target air volume 139, for example, an air volume of 100 [m³/h] by target rotational speed calculating part 142 in a state where exhaust air damper 123 is in a fully-closed state and supply air damper 122 is in a fully-open state, and sets such a rotational speed as a rotational speed of supply air fan 118.

Target rotational speed determination part 148 compares the rotational speed of exhaust air fan 119 with the rotational speed of supply air fan 118, and determines the larger rotational speed as the target rotational speed.

Damper opening determination part 145 fully closes a damper in the air flow passage where rotational speed of the fan is larger out of the damper in exhaust air flow passage 115 and the damper in supply air flow passage 114. Damper opening determination part 145 determines a degree of opening of the damper in the air flow passage having a smaller rotational speed such that an air volume in the air flow passage having the smaller rotational speed becomes the target air volume.

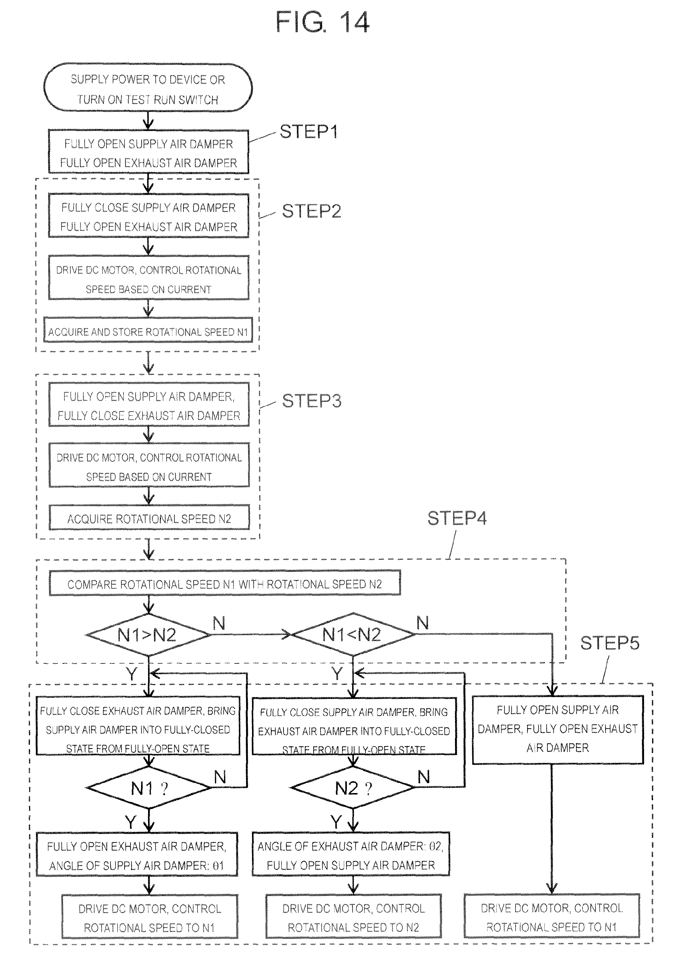

The manner of operation of maintaining an air volume balance between supply air and exhaust air in the above-mentioned configuration is described with reference to FIG. 14 which is a control flowchart of the supply and exhaust type ventilation device according to the second embodiment of the present invention.

The flow of steps in the flowchart is constituted of STEP 1 to STEP 5. STEP 1 is a step of fully opening supply air damper 122 and exhaust air damper 123. STEP 2 is a step of determining a rotational speed of exhaust air fan 119 with respect to a target air volume determined by exhaust air flow passage rotational speed determination part 143. STEP 3 is a step of determining a rotational speed of supply air fan 118 with respect to target air volume 139 determined by supply air flow passage rotational speed determination part 144. STEP 4 is a step of determining a target rotational speed by target rotational speed determination part 148. STEP 5 is a step of determining a degree of opening of supply air damper 122 and a degree of opening of exhaust air damper 123 by damper opening determination part 145.

The operation of supply and exhaust type ventilation device 101 is performed in a state shown in FIG. 11A where ducts 107, 112 are connected to main body 102. Firstly, when power is supplied to supply and exhaust type ventilation device 101 or a test run switch (not shown) is pushed, as shown in STEP 1, controller 137 brings supply air damper 122 and exhaust air damper 123 into a fully-open state.

Next, as shown in STEP 2, exhaust air flow passage rotational speed determination part 143 brings supply air damper 122 into a fully-closed state while maintaining exhaust air damper 123 in a fully-open state by controlling damper drive controller 136. Then, exhaust air flow passage rotational speed determination part 143 drives DC motor 120 by controlling DC motor drive controller 132 such that the relationship between a current and a rotational speed of exhaust air fan 119 agrees with the relationship between the current and the rotational speed of exhaust air fan 119 stored in target rotational speed calculating part 142 in advance. Due to such an operation, one rotational speed N1 is acquired. This rotational speed N1 is rotational speed information necessary for maintaining target air volume 139, for example, an air volume of 100 [m³/h] at a length of duct 107 actually connected to exhaust air flow passage 115.

Next, as shown in STEP 3, supply air flow passage rotational speed determination part 144 controls damper drive controller 136 such that supply air damper 122 is brought into a fully-open state and exhaust air damper 123 is brought into a fully-closed state. Then, supply air flow passage rotational speed determination part 144 drives DC motor 120 by controlling DC motor drive controller 132 such that the relationship between a current and a rotational speed of supply air fan 118 agrees with the relationship between the current and the rotational speed of supply air fan 118 stored in target rotational speed calculating part 142 in advance. Due to such an operation, one rotational speed N2 is acquired. This rotational speed N2 is rotational speed information necessary for maintaining a target air volume 139, for example, an air volume of 100 [m³/h] in a state where exhaust air damper 123 is in a fully-closed state.

Next, as shown in STEP 4, target rotational speed determination part 148 compares rotational speed N1 determined by exhaust air flow passage rotational speed determination part 143 with rotational speed N2 determined by supply air flow passage rotational speed determination part 144 and determines a target rotational speed. That is, when rotational speed N1 is larger than rotational speed N2 (rotational speed N1 > rotational speed N2), rotational speed N1 is set as the target rotational speed. On the other hand, when rotational speed N1 is smaller than rotational speed N2 (rotational speed N1 < rotational speed N2), rotational speed N2 is set as a target rotational speed. Further, when rotational speed N1 is equal to rotational speed N2 (rotational speed N1 = rotational speed N2), rotational speed N1 is set as the target rotational speed.

That is, when rotational speed N1 is larger than rotational speed N2 (rotational speed N1 > rotational speed N2), a flow passage pressure loss in exhaust air flow passage 115 is higher than a flow passage pressure loss in supply air flow passage 114. In this state, when supply air flow passage 114 is not adjusted, an air volume in supply air flow passage 114 becomes larger than an air volume in exhaust air flow passage 115. Accordingly, it is necessary to make supply air flow passage 114 realize target air volume 139 again in a state where a pressure loss is increased.

Damper opening determination part 145 adjusts a degree of opening of the damper in STEP 5. That is, damper opening determination part 145 adjust an angle of supply air damper 122 connected to the air flow passage having a low pressure loss while maintaining a fully-closed state of exhaust air damper 123. At this stage, rotational speed N1 of DC motor 120 which is determined based on a pressure loss in exhaust air flow passage 115 and is determined and calculated with respect to exhaust air flow passage 115 is set as a target rotational speed.

Firstly, damper opening determination part 145 controls DC motor 120 such that the relationship between a current value and a rotational speed agrees with the relationship between a current value and a rotational speed corresponding to rotational speed N1 calculated by target rotational speed calculating part 142. Damper opening determination part 145 gradually decreases a damper angle of supply air damper 122 such that target rotational speed N1 can be maintained.

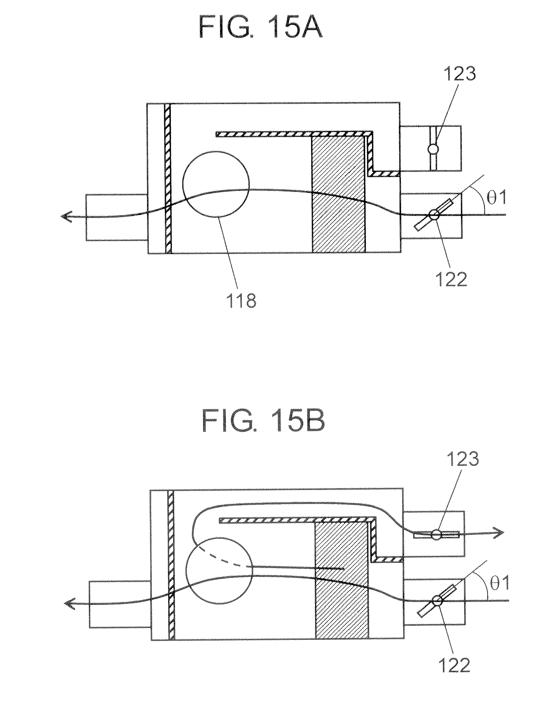

FIG. 15A is a schematic view of the supply and exhaust type ventilation device according to the second embodiment of the present invention at the time of detecting an angle of supply air damper showing the angle of the damper under a condition of rotational speed N1 > rotational speed N2, and FIG. 15B is an operation explanatory view of the supply and exhaust type ventilation device for describing the operation of the ventilation device at the time of controlling an air volume balance under the condition of rotational speed N1 > rotational speed N2. When operation rotational speed of supply air fan 118 shown in FIG. 15A becomes N1, angle θ1 of supply air damper 122 is stored. Then, as shown in FIG. 15B, exhaust air damper 123 is brought into a fully-open state from a fully-closed state.

Due to such operations, a flow passage pressure loss in supply air flow passage 114 and a flow passage pressure loss in exhaust air flow passage 115 are maintained equal. By driving DC motor 120 at rotational speed N1, target air volume 139, for example, an air volume of 100 [m³/h] is ensured in both of supply air flow passage 114 and exhaust air flow passage 115.

Controller 137 controls supply and exhaust type ventilation device 101 under the condition of the angle of supply air damper 122 adjusted in the above-mentioned manner in addition to the condition that exhaust air damper 123 is in a fully open state and the condition that a rotational speed is set to N1. As a result, ventilation in a building is performed while ensuring target air volume 139 in both of supply air flow passage 114 and exhaust air flow passage 115.

A state where rotational speed N1 is smaller than rotational speed N2 (rotational speed N1 < rotational speed N2) indicates that a flow passage pressure loss in supply air flow passage 114 is higher than a flow passage pressure loss in exhaust air flow passage 115. When an air flow resistance in exhaust air flow passage 115 is not adjusted, an air volume in exhaust air flow passage 115 becomes larger than an air volume in supply air flow passage 114. Accordingly, it is necessary to make exhaust air flow passage 115 realize target air volume 139 again in a state where a pressure loss is increased.

Supply air damper 122 is brought into a fully-closed state and an angle of exhaust air damper 123 is adjusted as shown in STEP 5. At this stage, rotational speed N2 of DC motor 120 which is determined and calculated with respect to supply air flow passage 114 is set as a target rotational speed.

Firstly, damper opening determination part 145 controls DC motor 120 such that the relationship between a current value and a rotational speed agrees with the relationship between the current value and the rotational speed corresponding to rotational speed N2 calculated by target rotational speed calculating part 142. Damper opening determination part 145 gradually decreases a damper angle of exhaust air damper 123 such that target air volume can be maintained.

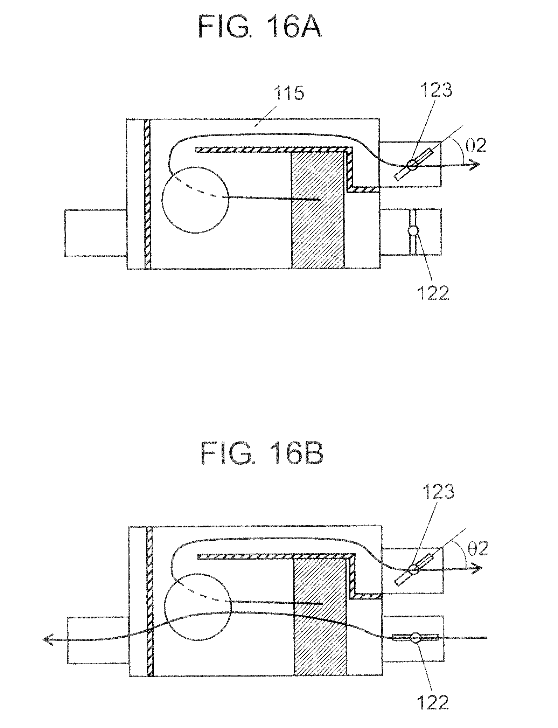

Next, FIG. 16A is a schematic view of the supply and exhaust type ventilation device according to the second embodiment of the present invention at the time of detecting an angle of exhaust air damper showing the angle of the damper under a condition of N1 < N2, and FIG. 16B is an operation explanatory view of the supply and exhaust type ventilation device for describing the operation of the ventilation device at the time of controlling an air volume balance under the condition of N1 < N2. As shown in FIG. 16A, angle θ2 of exhaust air damper 123 when an operation rotational speed in exhaust air flow passage 115 becomes N2 is stored. As shown in FIG. 16B, supply air damper 122 is brought into a fully-open state from a fully-closed state.

Due to such operations, a flow passage pressure loss in supply air flow passage 114 and a flow passage pressure loss in exhaust air flow passage 115 are maintained equal. By driving DC motor 120 at rotational speed N2, target air volume 139, for example, an air volume of 100 [m³/h] can be ensured in both of supply air flow passage 114 and exhaust air flow passage 115.

Controller 137 controls supply and exhaust type ventilation device 101 under the condition of the angle of exhaust air damper 123 adjusted in the above-mentioned manner in addition to the conditions that supply air damper 122 is in a fully-open state and the condition that a rotational speed is set to N2. As a result, ventilation in a building is performed while ensuring target air volume 139 in both of supply air flow passage 114 and exhaust air flow passage 115.

When rotational speed N1 is equal to rotational speed N2 (rotational speed N1 = rotational speed N2), a flow passage pressure loss in supply air flow passage 114 and a flow passage pressure loss in exhaust air flow passage 115 are already equal. In this case, both supply air damper 122 and exhaust air damper 123 are brought into a fully-open state, and DC motor 120 is driven at rotational speed N1. Due to such operations, target air volume 139, for example, an air volume of 100 [m³/h] is ensured in both supply air flow passage 114 and exhaust air flow passage 115.

In this manner, in supply and exhaust type ventilation device 101, out of exhaust air damper 123 and supply air damper 122, the damper in the air flow passage having a larger rotational speed is fully closed. Further, a degree of opening of the damper in the air flow passage having a smaller rotational speed is adjusted such that the rotational speed becomes a target rotational speed in the air flow passage having the smaller rotational speed.

As described above, in the second embodiment of the present invention, the difference in pressure loss between both air flow passages is eliminated by adjusting an angle of the damper in the air flow passage having a smaller pressure loss. Due to such a configuration, even when DC motor 120 is driven at one rotational speed, both a supply air volume and an exhaust air volume can be ensured so that an equal air volume balance between supply air and exhaust air can be maintained.

Further, with respect to a result on rotational speed detected in exhaust air flow passage rotational speed determination part 143 and on rotational speed detected in supply air flow passage rotational speed determination part 144, the damper which is connected to the air flow passage where a higher rotational speed is detected is brought into a fully-open state. Due to such operations, it is possible to decrease an energy loss of DC motor 120 brought about by closing the damper by adjusting an opening area of only a damper in an air flow passage having a lower flow passage pressure loss.

The above-mentioned operations indicated in the flowchart are performed only when power is applied to supply and exhaust type ventilation device 101 or a test run switch (not shown) is operated. Accordingly, it is unnecessary to bring dampers into a fully-closed state in a usual use and hence, there is no possibility that a user feels discomfort due to noises generated when the damper is fully closed.

There is a case where supply and exhaust type ventilation device 101 cannot produce target air volume 139 due to reforming of supply and exhaust type ventilation device 101 or clogging of apparatuses or the like so that an air volume between supply air and exhaust air is unbalanced. Even in such a case, a user can reset target air volume 139 at a desired timing by supplying power to the supply and exhaust type ventilation device or by operating a test run switch (not shown),

### THIRD EXEMPLARY EMBODIMENT

In the third embodiment of the present invention, constitutional elements identical with the constitutional elements of the second embodiment are given the same symbols, and the detailed description thereof is omitted, and only points which make the third embodiment differ from the second embodiment will be described. As described above, in the second embodiment, the description is made with respect to the case where an angle of the damper is adjusted for realizing a target air volume with high accuracy. However, there may be a case where air leaks into supply air flow passage 114 from exhaust air flow passage 115 and an air volume due to such leakage is added to an air volume in supply air flow passage 114 and hence, an air volume which can be supplied from the outside of the room becomes insufficient.

It is considered that such leakage of air occurs due to irregularities in the manufacture of supply and exhaust type ventilation devices 101, for example, the formation of a gap in a joint portion between main body 102 and partition plate 116 shown in FIG. 11A and FIG. 11B, or irregularities in adhesion between constitutional elements of heat exchange element 121. That is, to realize target air volume 139 with high accuracy, it is necessary to increase rotational speeds of supply air fan 118 and exhaust air fan 119.

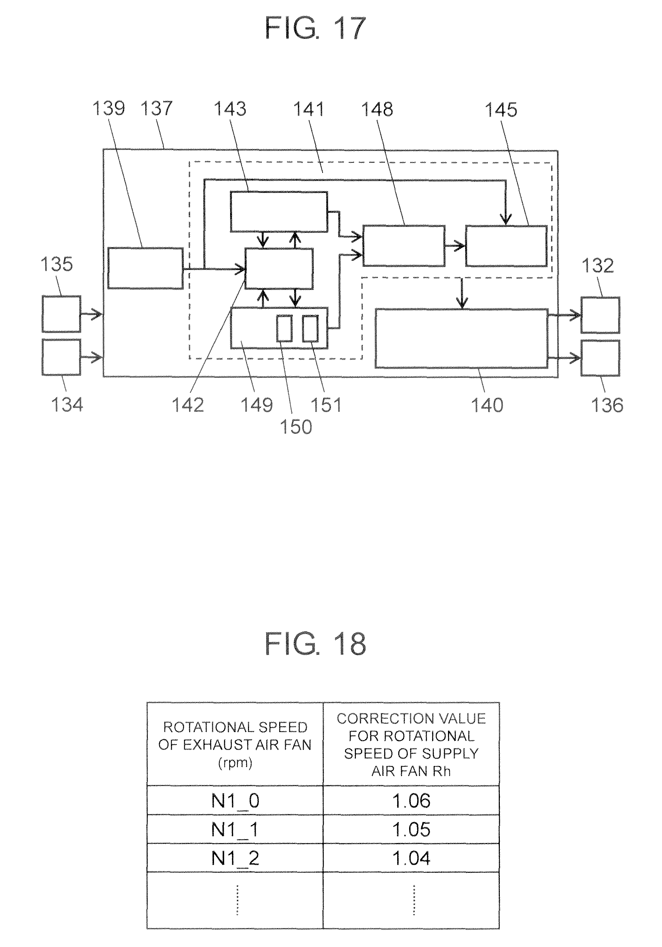

In view of the above, in the third embodiment, as shown in FIG. 17, initial setting part 141 includes supply air flow passage corrected rotational speed determination part 149 in place of supply air flow passage rotational speed determination part 144 of the second embodiment.

Supply air flow passage corrected rotational speed determination part 149 includes: supply air flow passage correction value calculating part 150; and rotational speed correcting part 151. In this embodiment, supply air flow passage correction value calculating part 150 calculates, using a rotational speed of exhaust air fan 119 calculated by exhaust air flow passage rotational speed determination part 143 as a base, a correction value for a rotational speed of supply air fan 118 based on the relationship between a rotational speed and a correction value of exhaust air fan 119 stored in advance. Rotational speed correcting part 151 corrects a rotational speed which is calculated by target rotational speed calculating part 142 and at which supply air fan 118 realizes target air volume 139 using a correction value calculated by supply air flow passage correction value calculating part 150.

The configuration of controller 137 is described with reference to FIG. 17 which is a block diagram of a CPU of a supply and exhaust type ventilation device according to the third embodiment of the present invention. Controller 137 includes target air volume controller 140 and initial setting part 141.

Initial setting part 141 includes: target rotational speed calculating part 142; exhaust air flow passage rotational speed determination part 143; supply air flow passage corrected rotational speed determination part 149; target rotational speed determination part 148; and damper opening determination part 145. In this embodiment, supply air flow passage corrected rotational speed determination part 149 calculates a rotational speed of supply air fan 118. Supply air flow passage corrected rotational speed determination part 149 includes supply air flow passage correction value calculating part 150 and rotational speed correcting part 151.

FIG. 18 is a table showing rotational speed correction values of the supply and exhaust type ventilation device according to the third embodiment of the present invention. Supply air flow passage correction value calculating part 150 calculates, based on a rotational speed of exhaust air fan 119 which is calculated by exhaust air flow passage rotational speed determination part 143, a correction value for a rotational speed of supply air fan 118 from the relationship between a rotational speed and a correction value of exhaust air fan 119 which is shown in FIG. 18 and is stored in advance. Rotational speed correcting part 151 corrects a rotational speed of supply air fan 118 using a rotational speed correction value for supply air fan 118. For example, as shown in FIG. 18, when a rotational speed calculated by exhaust air flow passage rotational speed determination part 143 is N1_2, a correction value for supply air fan 118 is set as 1.04.

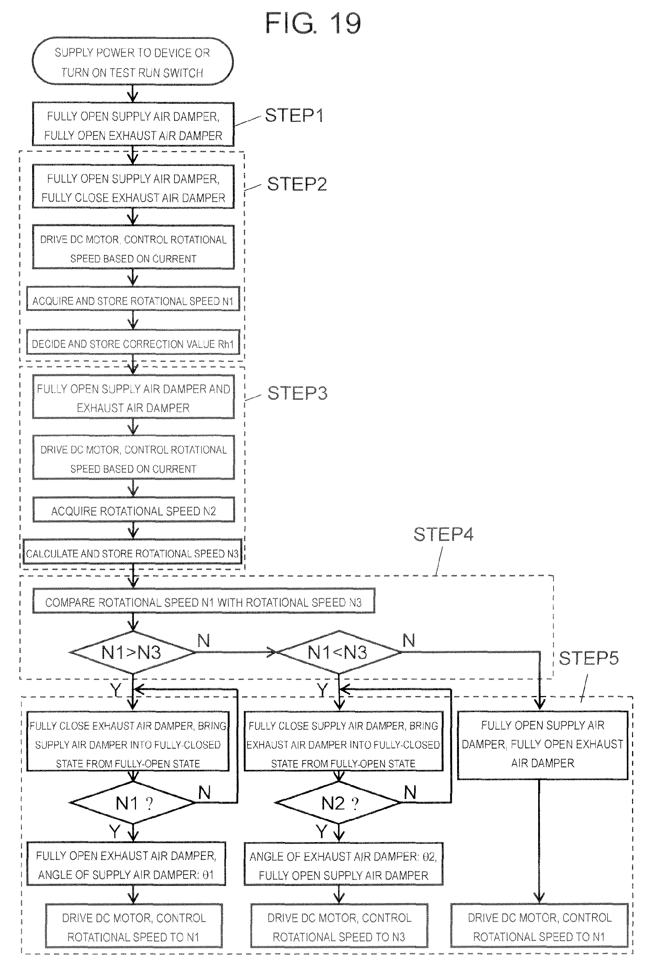

The operation of maintaining an air volume balance between supply air and exhaust air in the above-mentioned configuration is described with reference to FIG. 19 which is a control flowchart of the supply and exhaust type ventilation device according to the third embodiment of the present invention.

In the same manner as the flowchart shown in FIG. 14, the flow of steps in the flowchart shown in FIG. 19 is constituted of STEP 1 to STEP 5, and purposes of STEP 1 to STEP 5 in FIG. 19 are equal to purposes of STEP 1 to STEP 5 in FIG. 14. A point which makes the flowchart shown in FIG. 19 differ from the flowchart shown in FIG. 14 is that, in STEP 2, supply air flow passage correction value calculating part 150 calculates a correction value Rh1 for a rotational speed of supply air fan 118 from rotational speed N1 of exhaust air fan 119 determined by exhaust air flow passage rotational speed determination part 143.

In STEP 3, rotational speed correcting part 151 acquires rotational speed N3 by multiplying rotational speed N2 by correction value Rh1 determined in STEP 2.

Rotational speed N3 is rotational speed information necessary for maintaining target air volume 139, for example, an air volume of 100 [m³/h] in a state where a duct is actually connected to supply air flow passage 114 and exhaust air damper 123 is in an open state.

Next, as shown in STEP 4, target rotational speed determination part 148 determines target rotational speed by comparing rotational speed N1 determined by exhaust air flow passage rotational speed determination part 143 with rotational speed N3 determined by supply air flow passage rotational speed determination part 144. That is, when rotational speed N1 is larger than rotational speed N3 (rotational speed N1 > rotational speed N3), rotational speed N1 is set as a target rotational speed. On the other hand, when rotational speed N1 is smaller than rotational speed N3 (rotational speed N1 < rotational speed N3), rotational speed N3 is set as a target rotational speed. Further, when rotational speed N1 is equal to rotational speed N3 (rotational speed N1 = rotational speed N3), rotational speed N1 is set as a target rotational speed.

Damper opening determination part 145 adjusts a degree of opening of the damper in STEP 5. That is, when rotational speed N1 is larger than rotational speed N3 (rotational speed N1 > rotational speed N3), such a state indicates that a flow passage pressure loss in exhaust air flow passage 115 is higher than a flow passage pressure loss in supply air flow passage 114. In this state, when a pressure in supply air flow passage 114 is not adjusted, an air volume in supply air flow passage 114 becomes larger than an air volume in exhaust air flow passage 115. Accordingly, supply air flow passage 114 is configured to realize target air volume 139 again in a state where a pressure loss is increased.

While maintaining exhaust air damper 123 in a fully-closed state, an angle of supply air damper 122 connected to an air flow passage having a low pressure loss is adjusted. At this stage, rotational speed N1 of DC motor 120 which is determined based on a pressure loss in exhaust air flow passage 115 and is calculated with respect to exhaust air flow passage 115 is set as a target rotational speed.

Damper opening determination part 145 controls DC motor 120 such that the relationship between a current and a rotational speed of supply air fan 118 agrees with the relationship between the current and the rotational speed of supply air fan 118 corresponding to target rotational speed N1 which is calculated by and stored in target rotational speed calculating part 142 in advance. Damper opening determination part 145 gradually decreases a damper angle of supply air damper 122 such that target rotational speed N1 can be maintained.

Further, when rotational speed N1 is smaller than rotational speed N3 (rotational speed N1<rotational speed N3), such a state indicates that a flow passage pressure loss in supply air flow passage 114 is higher than a flow passage pressure loss in exhaust air flow passage 115. When an air flow resistance in exhaust air flow passage 115 is not adjusted, an air volume in exhaust air flow passage 115 becomes larger than an air volume in supply air flow passage 114. Accordingly, exhaust air flow passage 115 is configured to realize target air volume 139 again in a state where a pressure loss is increased.

Supply air damper 122 is brought into a fully-closed state, and an angle of exhaust air damper 123 is adjusted. At this stage, rotational speed N3 of DC motor 120 which is calculated with respect to supply air flow passage 114 is set as a target rotational speed. Damper opening determination part 145 controls DC motor 120 such that the relationship between a current value and a rotational speed of exhaust air fan 119 in exhaust air flow passage 115 agrees with the relationship between the current value and the rotational speed of exhaust air fan 119 corresponding to target rotational speed N3 which are calculated and stored in target rotational speed calculating part 142 in advance. A damper angle of exhaust air damper 123 is gradually decreased such that target rotational speed N3 can be maintained.

When rotational speed N1 is equal to rotational speed N3 (rotational speed N1 = rotational speed N3), a flow passage pressure loss in supply air flow passage 114 and a flow passage pressure loss in exhaust air flow passage 115 are already equal. Accordingly, both supply air damper 122 and exhaust air damper 123 are brought into a fully-open state. By driving DC motor 120 at rotational speed N1, target air volume 139, for example, an air volume of 100 [m³/h] can be ensured in both supply air flow passage 114 and exhaust air flow passage 115.

As has been described heretofore, supply and exhaust type ventilation device 101 sets a rotational speed obtained by correction from rotational speed correcting part 151 as the rotational speed of supply air fan 118. Supply and exhaust type ventilation device 101 corrects leakage of air between supply air flow passage 114 and exhaust air flow passage 115, and an angle of the damper in the air flow passage having a lower pressure loss is adjusted. Accordingly, even when leakage of air occurs in main body 102, DC motor 120 is driven at one rotational speed while making pressure losses in both respective air flow passages equal. As a result, both a supply air volume and an exhaust air volume can be ensured while maintaining an equal air volume balance between supply air and exhaust air.

### INDUSTRIAL APPLICABILITY

Supply and exhaust type ventilation device according to the present invention is suitably applicable to a duct-type heat exchanger, a duct-type air conditioner or the like which aims at a heat exchange between outside air and indoor air.

According to supply and exhaust type ventilation device of the present invention, when the exhaust of air and the supply of air are performed simultaneously using one DC motor, a predetermined air volume can be ensured and a balance between a supply air volume and an exhaust air volume is maintained. Accordingly, supply and exhaust type ventilation device of the present invention is suitably applicable to an air conditioner of a type which is used for general houses where the supply of air and the exhaust of air are performed simultaneously.

### REFERENCE MARKS IN THE DRAWINGS

- 1, 101: supply and exhaust type ventilation device
- 2: outside air suction opening
- 3: indoor air exhaust opening
- 4: outside supply air opening
- 5: indoor air suction opening
- 6: supply air flow passage
- 7: exhaust air flow passage
- 8: supply air fan
- 9: exhaust air fan
- 10: electric motor
- 10a: rotary shaft
- 11: heat exchange element
- 12: supply-air side opening adjusting part
- 13: exhaust-air side opening adjusting part
- 14: opening adjusting part
- 15, 19: shielding portion
- 16, 25: opening
- 17: holding portion
- 18: electrically-operated opening adjusting part
- 20: pinion gear
- 21: holding portion
- 22: electric motor for adjusting opening (electrically-operated part)
- 23: electric motor holding cover
- 24: cover
- 26: heater (heating part)
- 27: outside air filter
- 28: indoor air filter
- 30, 160: outside air
- 31: outside of room
- 32: inside of room
- 33, 161: indoor air
- 34: outside of room
- 35: main body
- 37: air volume sensor (measuring part)
- 38: controller
- 102: main body
- 103: ceiling surface
- 104: side surface
- 105: outdoor-side suction opening
- 106: outdoor-side discharge opening
- 107, 112: duct
- 108: building outer wall surface
- 109: indoor-side suction opening
- 110: opposing surface
- 111: indoor-side discharge opening
- 113: small-diameter duct
- 114: supply air flow passage
- 115: exhaust air flow passage
- 116, 117: partition plate
- 118: supply air fan
- 119: exhaust air fan
- 120: DC motor
- 120a: drive shaft
- 121: heat exchange element
- 122: supply air damper
- 123: exhaust air damper
- 124, 125: electric motor
- 126: commercial power source
- 127: power source circuit
- 128: drive device
- 129: rectifier smoothing circuit
- 130: switching element
- 131: switching transformer
- 132: DC motor drive controller
- 133: hall element
- 134: rotational speed detector
- 135: current detector
- 136: damper drive controller
- 137: controller
- 138: regulator
- 139: target air volume
- 140: target air volume controller
- 141: initial setting part
- 142: target rotational speed calculating part
- 143: exhaust air flow passage rotational speed determination part
- 144: supply air flow passage rotational speed determination part
- 145: damper opening determination part
- 148: target rotational speed determination part
- 149: supply air flow passage corrected rotational speed determination part
- 150: supply air flow passage correction value calculating part
- 151: rotational speed correcting part

## Claims

1. A supply and exhaust type ventilation device comprising:
a supply air flow passage for supplying outside air into an inside of a room from an outside of the room by a supply air fan, the supply air flow passage being disposed in an inside of a main body; and
an exhaust air flow passage for blowing off indoor air from the inside of the room to the outside of the room by an exhaust air fan, the exhaust air flow passage being disposed in the inside of the main body,
wherein the supply air fan and the exhaust air fan are mounted on a rotary shaft of one electric motor, and
an opening adjusting part, which adjusts an air volume of the outside air and the indoor air passing through the supply air flow passage and the exhaust air flow passage respectively, is disposed in the supply air flow passage and the exhaust air flow passage respectively.

2. The supply and exhaust type ventilation device according to claim 1, wherein
the opening adjusting part includes:
a shielding portion disposed in the supply air flow passage or the exhaust air flow passage; and
an electrically operated part which is connected to the shielding portion and operates the shielding portion.

3. The supply and exhaust type ventilation device according to claim 2, further comprising:
a measuring part which measures an air volume in the supply air flow passage and an air volume in the exhaust air flow passage respectively; and
a controller which adjusts a degree of opening of the shielding portion by controlling the electrically-operated part in response to inputting of an output from the measuring part.

4. The supply and exhaust type ventilation device according to claim 1, wherein
a heat exchange element is disposed at a position where the supply air flow passage and the exhaust air flow passage intersect with each other, and
a heating part which heats the outside air is provided just in front of or just behind the opening adjusting part in the supply air flow passage.

5. The supply and exhaust type ventilation device according to claim 1, wherein
a heat exchange element is disposed at a position where the supply air flow passage and the exhaust air flow passage intersect with each other, and
a filter which prevents an intrusion of a foreign substance is disposed in the supply air flow passage and the exhaust air flow passage respectively.

6. A supply and exhaust type ventilation device comprising:
an indoor-side suction opening, an indoor-side discharge opening, an outdoor-side suction opening, and an outdoor-side discharge opening formed in a main body;
a supply air damper which adjusts an opening area of the outdoor-side suction opening;
an exhaust air damper which adjusts an opening area of the outdoor-side discharge opening:
a supply air flow passage which makes the outdoor-side suction opening communicate with the indoor-side discharge opening;
an exhaust air flow passage which makes the indoor-side suction opening communicate with the outdoor-side discharge opening;
a supply air fan and an exhaust air fan which are disposed in the supply air flow passage and the exhaust air flow passage respectively;
a DC motor which is a direct-current motor and drives the supply air fan and the exhaust air fan using one drive shaft;
a damper drive controller which drives the supply air damper and the exhaust air damper;
a DC motor drive controller which adjusts a drive voltage of the DC motor;
a current detection part which detects a current flowing in the DC motor;
a rotational speed detection part which detects a rotational speed of the DC motor; and
a controller for controlling a drive voltage of the DC motor for adjusting degrees of openings of the supply air damper and the exhaust air damper such that one dumper is fully opened and the other damper produces a target air volume, wherein
the controller includes an initial setting part which determines a target rotational speed of the DC motor and the degree of openings of the supply air damper and the exhaust air damper with respect to target air volumes of the supply air fan and the exhaust air fan,
the initial setting part includes:
a target rotational speed calculating part which calculates the target rotational speed by adjusting a drive voltage based on a relationship between the current flowing in the DC motor and the rotational speed of the DC motor at which a target air volume is acquired by operating the DC motor drive controller;
an exhaust air flow passage rotational speed determination part which calculates the rotational speed at which the exhaust air fan realizes a target air volume by the target rotational speed calculating part in a state where the supply air damper is in a fully-closed state and the exhaust air damper is in a fully-opened state, and sets the rotational speed as a rotational speed of the exhaust air fan;
a supply air flow passage rotational speed determination part which calculates the rotational speed at which the supply air fan realizes the target air volume by the target rotational speed calculating part in a state where the exhaust air damper is in a fully-closed state and the supply air damper is in a fullyopened state, and sets the rotational speed as a rotational speed of the supply air fan;
a target rotational speed determination part which compares a rotational speed of the exhaust air fan with a rotational speed of the supply air fan, and determines a larger rotational speed as a target rotational speed; and
a damper opening determination part which determines the degree of opening of the exhaust air damper and the degree of opening of the supply air damper, and
the supply and exhaust type ventilation device adjusts the degree of opening of the damper in the flow passage where the rotational speed is smaller such that the flow passage where the rotational speed is smaller acquires a target air volume while fully closing the damper in the flow passage where a rotational speed is larger out of the exhaust air damper and the supply air damper.

7. The supply and exhaust type ventilation device according to claim 6, wherein
the initial setting part includes a supply air flow passage corrected rotational speed determination part in place of the supply air flow passage rotational speed determination part,
the supply air flow passage corrected rotational speed determination part includes a supply air flow passage correction value calculating part and a rotational speed correcting part,
the supply air flow passage correction value calculating part calculates, using a rotational speed of the exhaust air fan determined by the exhaust air flow passage rotational speed determination part as a base, a correction value for a rotational speed of the supply air fan based on the relationship between a rotational speed and a correction value of exhaust air fan stored in advance,
the rotational speed correcting part corrects a rotational speed which is calculated by the target rotational speed calculating part and at which the supply air fan realizes the target air volume using the correction value, and
a rotational speed corrected by the rotational speed correcting part is set as a rotational speed of the supply air fan.

8. The supply and exhaust type ventilation device according to claim 6, wherein a heat exchange element which performs heat exchange between the outside air and the indoor air is disposed at an intersection portion of the supply air flow passage and the exhaust air flow passage.
